# EUROPÄISCHE PATENTANMELDUNG

(11) **EP 1 840 550 A1**
(43) Veröffentlichungstag der Anmeldung: **03.10.2007**
(21) Anmeldenummer: 07000960.0
(22) Anmeldetag: 18.01.2007
(51) Int. Cl.: G01M 1/02, G01M 1/08, G01M 1/22, G01M 1/28

(54) **Verfahren und Vorrichtung zum Auswuchten von Rädern**

(30) Priorität: 28.03.2006 DE 102006014663
(71) Anmelder: att Automotive Testing Technologies GmbH, 77694 Kehl-Auenheim (DE)
(72) Erfinder: Vauderwange, Thomas, 77656 Offenburg (DE)
(74) Vertreter: Brommer, Hans Joachim

(57) **Zusammenfassung**

Verfahren und Vorrichtung zum Auswuchten von Rädern, wobei durch zumindest einen Testlauf des Rades die Größe und Position seine Unwucht bestimmt und ein Applikationsorgan gezielt zum Abtasten der Felgenmaße und Felgenposition und/oder zum Überbringen eines Ausgleichsgewichtes verwendet wird und die Bewegungen des Applikationsorgans erfasst werden. Wesentlich dabei ist, dass die Erfassung der Bewegungen des Applikationsorgans durch im Applikationsorgan angeordnete Bewegungssensoren unter Verzicht auf eine mechanische Führung des Applikationsorgans erfasst werden.

## Beschreibung

Die Erfindung betrifft ein Verfahren und eine Vorrichtung zum Auswuchten von Rädern, wobei durch zumindest einen Testlauf des Rades die Größe und Position seiner Unwucht bestimmt und ein Applikationsorgan gezielt zum Abtasten der Felgenmaße und Felgenposition und/oder zum Überbringen eines Ausgleichsgewichtes an eine Ausgleichsstelle der Felge verwendet wird und die Bewegungen des Applikationsorgans beim Abtasten und/oder beim Überbringen des Ausgleichsgewichtes erfasst und ausgewertet werden.

Konkret wird dabei das auszuwuchtende Rad auf eine Messspindel einer Auswuchtmaschine aufgespannt, dann werden die geometrischen Daten des Rades und seiner Position relativ zur Auswuchtmaschine abgetastet und gespeichert und in wenigstens einem Testlauf des Rades wird die Größe der für den Unwuchtausgleich erforderlichen Ausgleichsgewichte und die Position der Ausgleichsstellen ermittelt.

Durch die DE 4 143 623 ist es bekannt, das Applikationsorgan mit einer Aufnahme für das Ausgleichsgewicht und mit einer Tastspitze zu versehen, um das Ausgleichsgewicht gezielt an die zuvor gemessene Ausgleichsposition an der Felge heranzuführen. Bei diesem bekannten System ist das Applikationsorgan als in einer gemeinsamen Ebene mit der Längsmittelachse der Messspindel ausziehbares Organ ausgebildet und mit einer Winkelmesseinrichtung ausgestattet, die eine zu dem Ausgleichsradius proportionale Winkelstellung des Applikationsorgans misst.

Der vorliegenden Erfindung liegt die Aufgabe zugrunde, das bekannte Auswuchtsystem in der Handhabung zu vereinfachen, ohne dabei die Genauigkeit bei der Abtastung der Felge und/oder beim Anbringen des Ausgleichsgewichtes an der Ausgleichsstelle zu beeinträchtigen. Zugleich soll sich die Erfindung durch kostengünstigen Aufbau und hohe Betriebssicherheit auszeichnen.

Diese Aufgabe wird erfindungsgemäß dadurch gelöst, dass die Richtung und Größe der Bewegungen des Applikationsorgans beim Abtasten der Felge und/oder beim Überbringen des Ausgleichsgewichtes zur Ausgleichsstelle durch Trägheitsnavigation unter Verzicht auf eine mechanische Führung des Applikationsorgans erfasst werden.

Der Kern der Erfindung besteht also darin, auf die bisher übliche und notwendige mechanische Anlenkung des Applikationsorgans an der Auswuchtmaschine zu verzichten und stattdessen ein beliebig im Raum bewegliches Applikationsorgan, bevorzugt in Form eines Handgriffes, einzusetzen, dessen Bewegungen durch in das Applikationsorgan eingebaute Sensoren erfasst werden. Besonders geeignete Sensoren sind Accelerometer, die in der Lage sind Beschleunigungen des Applikationsorgans in allen drei Raumrichtungen zu erfassen. Diese Beschleunigungs-Daten werden zur Positionsbestimmung aufintegriert und zwar im Applikationsorgan oder in der Recheneinheit der Wuchtmaschine. Die Datenübertragung erfolgt über eine Funkstrecke oder ein geeignetes Kabel an die Recheneinheit der Wuchtmaschine. Zur Erhöhung der Messgenauigkeit empfiehlt es sich, dreidimensionale Gyroskope zu verwenden, die Änderungen der Winkellage des Applikationsorgans erfassen, wobei diese Winkeländerungen ebenfalls aufintegriert werden.

Das erfindungsgemäße Messsystem vereinfacht also die Mechanik der Auswuchtmaschine erheblich und erleichtert gleichzeitig die Handhabung, weil die Bedienungsperson das Applikationsorgan frei bewegen kann.

Besonders günstig ist es, wenn das erfindungsgemäße Messsystem zur berührungslosen richtungs- und größenmäßigen Bewegungen des Applikationsorgans sowohl zur Abtastung der Felgenmaße und Felgenposition wie auch zum Heranführen des Ausgleichsgewichtes benutzt wird.

Eine besonders vorteilhafte Weiterbildung der Erfindung besteht darin, dass eine Aufnahmestation für den Applikationssensor vorgesehen ist, wo eine Positions-Eichung des Applikationssensors erfolgt, und zwar am besten automatisch, jedes Mal bei Rückgabe des Applikationssensors in die Aufnahmestation. Dadurch erhöht sich die Messgenauigkeit, weil jedes erneute Heranführen des Applikationssensors an die Felge - sei es mit oder ohne Ausgleichsgewicht - von einem geeichten Nullpunkt beginnt.

Zur weiteren Bedienungserleichterung empfiehlt es sich, dass entweder automatisch ein Signal ausgelöst wird oder von der Bedienungsperson ein Signal ausgelöst wird, wenn der Applikationssensor beim Abtasten der Felge die Sollpositionen erreicht hat. Ebenso wird zweckmäßig ein Signal ausgelöst, wenn der Applikationssensor die Ausgleichsstelle für das Anbringen des Ausgleichsgewichtes erreicht. Es kann sich dabei um akustische oder optische Signale handeln, wobei auch eine Verfahrhilfe am Bildschirm zweckmäßig ist.

Die Vorrichtung zur Durchführung des erfindungsgemäßen Verfahrens ist dadurch gekennzeichnet, dass das Applikationsorgan zumindest eine Bewegungsmessgerät, insbesondere ein Accelerometer und ein Gyroskop, zur Erfassung der vom Applikationsorgan durchgeführten Bewegungen aufweist, und zwar vorzugsweise jeweils ein Accelerometer und jeweils ein Gyroskop für alle drei Raumrichtungen.

Dabei können die Accelerometer und die Gyroskope in einem gemeinsamen Mikrochip integriert sein.

Des Weiteren empfiehlt es sich, das Applikationsorgan als Handgriff auszubilden, der eine Aufnahmefläche für zumindest ein Ausgleichsgewicht aufweist. Die Aufnahmefläche kann magnetisch sein, um das Ausgleichsgewicht festzuhalten, stattdessen kommt auch eine Klemm- oder Rastverbindung in Betracht. In beiden Fällen wird das Ausgleichsgewicht so auf den Handgriff aufgelegt, dass seine Klebefläche nach oben weist, so dass es leicht gegen die Felge gedrückt werden kann. Der Schwerpunkt des ordnungsgemäß auf der Aufnahmefläche liegenden Ausgleichgewichtes fungiert als Referenzpunkt für die Positionserfassung des Applikationssensors.

Schließlich empfiehlt es sich, die bereits genannte Aufnahmestation für den Applikationssensor ortsfest am Unwucht-Messgerät zu montieren.

Weitere Merkmale und Vorteile der Erfindung ergeben sich aus der nachfolgenden Beschreibung eines Ausführungsbeispieles und aus der Zeichnung; dabei zeigt
Figur 1 eine schematische Teilansicht eines auf die Messspindel der Wuchtmaschine gespannten Rades;
Figur 2 eine Draufsicht auf das Applikationsorgan;
Figur 3 eine Draufsicht auf die Wuchtmaschine;
Figur 4 eine schematische Darstellung der Schrittfolge beim Abtasten der Felgendaten;
Figur 5 eine schematische Darstellung der Schrittfolge beim Heranführen der Ausgleichsgewichte an die Ausgleichsstelle der Felge;
Figur 6 ein Schaltschema für die Messwerterfassung.

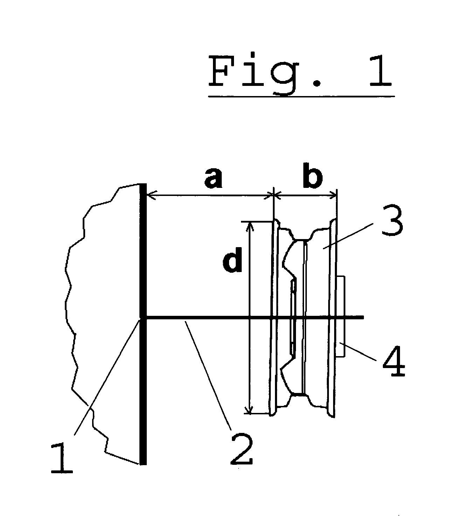

In Figur 1 erkennt man einen Teil der Auswuchtmaschine 1 mit ihrer Messspindel 2, auf welcher ein Rad, von dem nur die Felge 3 gezeichnet ist, mittels Spannmitteln 4 aufgespannt ist. Für das Auswuchten ist es wesentlich, die Geometrie der zu vermessenden Felge dahingehend zu erfassen, an welcher Stelle die Ausgleichsgewichte platziert werden können. Zu diesem Zweck wird der Durchmesser d der Felgenschulter sowie die Längsentfernung der Gewichtsposition innen (Messwert a) und außen (Messwert a + b) relativ zu einem Referenzpunkt an der Wuchtmaschine erfasst.

Bisher werden die Werte a und d über einen an der Wuchtmaschine gelagerten Innenabtastarm erfasst, indem die nötige Auszieh- und Schwenkbewegung des Innenabtastarmes, um dessen Spitze an die geplante Position des inneren Ausgleichsgewichtes zu bringen, mit geeigneten elektronischen Aufnehmern gemessen wird. Ähnlich kann die geplante Position für das äußere Ausgleichsgewicht über einen Außenabtastarm erfasst werden.

Stattdessen ist es auch möglich, die genannten Positionen durch ein und dasselbe Applikationsorgan anzufahren und zu erfassen.

Nicht zuletzt ist es grundsätzlich auch möglich, nur den inneren Abstand a zu messen, während die Felgenbreite b und der Durchmesser d der Felgenschulter von Hand eingegeben werden. Die entsprechenden Werte entnimmt die Bedienungsperson von der Felgenbezeichnung oder aus Tabellen.

Nach der Rotation des Rades im sogenannten Wuchtlauf, bei dem die zu klebenden oder einzuschlagenden Ausgleichsgewichte und die Ausgleichsstelle errechnet werden, positioniert die Bedienungsperson die Gewichte an der vorgesehenen Stelle, nämlich dort, wo das Applikationsorgan die Felge berührt hatte. Hierbei kommt es immer wieder zu Ungenauigkeiten, wenn die vorgesehene Position nicht genau getroffen wird, zumal die Bewegungen des Applikationsorgans aufgrund seiner mechanischen Anlenkung an der Auswuchtmaschine nicht leicht vonstatten gehen.

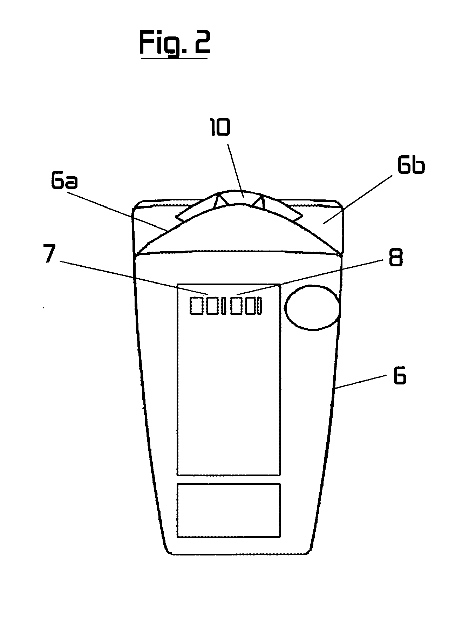

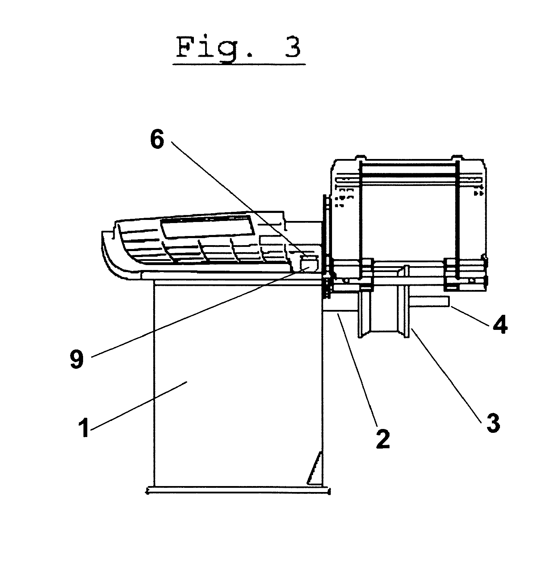

Hier setzt die vorliegende Erfindung an: Das Applikationsorgan ist, wie Figur 2 zeigt, als Handgriff 6 ausgebildet, der frei im Raum bewegbar ist und seine Positionssignale entweder über eine Funkstrecke oder ein flexibles Kabel an die Wuchtmaschine überträgt. Dazu ist das Applikationsorgan mit drei Acceleratoren 7 ausgerüstet, die jeweils einer der drei Raumrichtungen zugeordnet sind; ebenso mit drei Gyroskopen 8 (Kreisel-Lagemesser), um Änderungen in der Winkellage des Handgriffes in allen drei Raumrichtungen aufzunehmen. Der Messablauf erfolgt in der Weise, dass in einer definierten Ruheposition des Handgriffes 6, nämlich in einer ortsfesten Aufnahmestation 9, in die der Handgriff 6 spielfrei hineinpasst, vergleiche Figur 3, die Messsensoren 7 und 8 in den drei Raumrichtungen referenziert, also genullt werden.

Sobald die Messung der Felgendaten erfolgen soll, nimmt die Bedienungsperson den Handgriff 6 aus der Aufnahmestation 9 und führt ihn an die geplanten Positionen des Ausgleichsgewichtes auf der Felge. Dabei liegt es im Rahmen der Erfindung, eine am Handgriff 6 angeordnete Taste als Auslöser für die Übernahme des Messpunkts zu verwenden.

Die Strecken, die der Handgriff 6 von seiner Aufnahmestation 9 zu der Ausgleichsstelle an der Felge zurückgelegt hat, werden von den Sensoren 7 und 8 erfasst, indem die Beschleunigungen und Winkeländerungen im zeitlichen Verlauf festgehalten werden. Die Integration der Messwerte über der Zeit ergibt einen dreidimensionalen Geschwindigkeitsvektor, der wiederum über die Zeit integriert wird. Als Ergebnis erhält man zum Messzeitpunkt den Ortsvektor der gewünschten Ausgleichsstelle, also deren Position im Raum.

Prinzipiell wird also das aus der Luftfahrt bekannte Trägheitsnavigationssystem (INS) im Mikromaßstab nachgebildet, was mit dem heutigen Stand der Technik mit hinreichender Präzision und vertretbaren Kosten möglich ist. Dabei liegt es im Rahmen der Erfindung, die Genauigkeit noch dadurch zu erhöhen, dass die Zahl der Sensoren verdoppelt wird und die Messergebnisse gemittelt werden.

Auf diese Weise können mit zwei Abtastungen, die mit dem gleichen Handgriff 6 durchgeführt werden, die Felgendaten a, b und d gemessen werden.

Zweckmäßig wird der Handgriff 6 nach jedem Messvorgang wieder in seine Aufnahmestation 9 zurückgestellt, um eine erneute Nullstellung der Sensoren 7 und 8 auszulösen und somit die Genauigkeit der folgenden Messung zu erhöhen.

Nach dem Vermessen der Felge und der Unwucht wird das von der Wuchtmaschine angezeigte Ausgleichsgewicht auf dem Handgriff 6 positioniert. Dazu hat der Handgriff eine gewölbte Auflagefläche 6a mit einer in Axialrichtung daran angrenzenden Anschlagfläche 6b. Auf diese Weise kann das Ausgleichsgewicht 10, vergleiche Figur 2, passgenau auf dem Handgriff 6 positioniert werden.

Der Handgriff 6 wird dann mit dem Ausgleichsgewicht 10 an die Ausgleichsstelle der Felge herangeführt, wobei wiederum in der oben beschriebenen Weise die Bewegung des Handgriffes durch die Sensoren 7 und 8 erfasst und an die Auswuchtmaschine übertragen wird. Hat der Handgriff 6 die Sollposition erreicht, so wird ein Signal ausgelöst und die Bedienungsperson braucht lediglich noch das Ausgleichsgewicht 10 an die Felge anzudrücken, so dass die an der Oberseite des Ausgleichsgewichtes 10 angeordnete Klebeschicht die Verbindung mit der Felge herbeiführt. Handelt es sich hingegen bei dem Ausgleichsgewicht um ein Schlaggewicht, so hält die Bedienungsperson das Gewicht manuell an der Sollposition fest, zieht den Handgriff ab und schlägt das Ausgleichsgewicht ein.

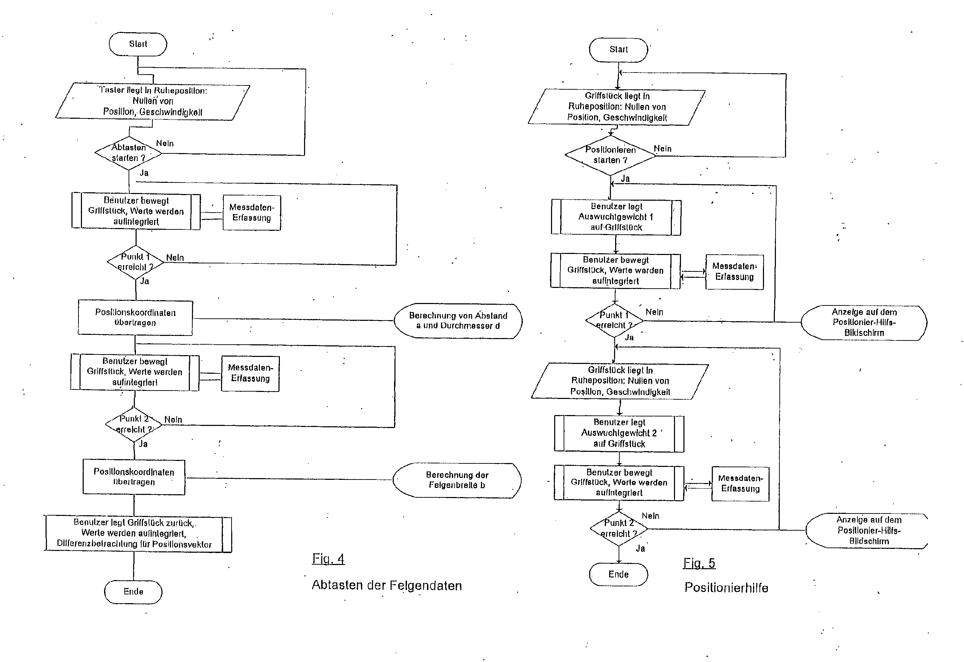

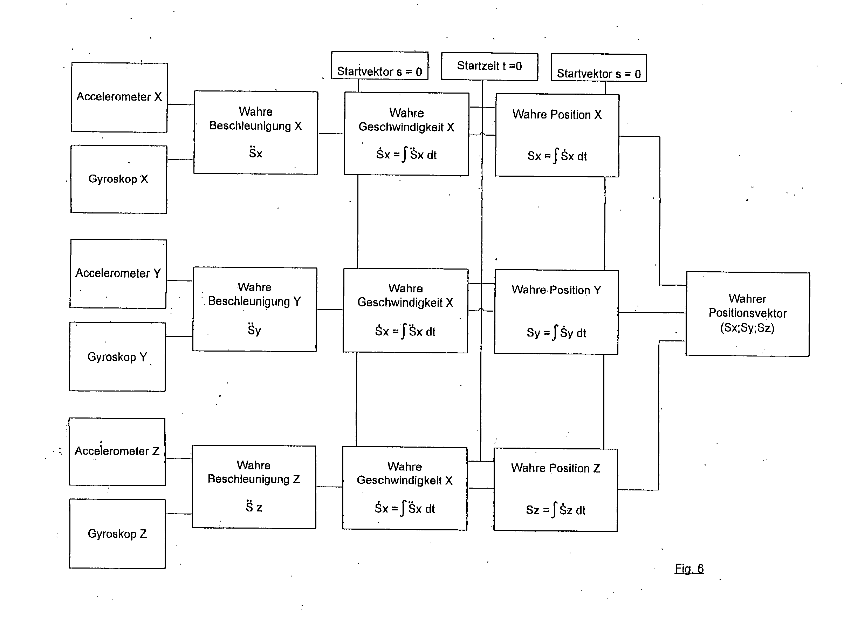

Die einzelnen Schritte beim Abtasten der Felgendaten sowie beim Positionieren des Ausgleichsgewichtes sind in den Figuren 4 und 5 im Einzelnen angegeben.

Figur 6 verdeutlicht die erfindungsgemäße Messwerterfassung. Zweckmäßig geben die Accelerometer und Gyroskope ihre Signale an die Umwuchtmaschine 1 ab, wo dann die Integration und weitere Verarbeitung der Messwerte stattfindet. Es liegt aber auch im Rahmen der Erfindung, diese Maßnahmen ganz oder teilweise im Handgriff 6 durchzuführen.

Zusammenfassend zeichnet sich die Erfindung also dadurch aus, dass die Positionsbestimmung des Applikationsorgans 6 ohne mechanische Verbindung mit dem Auswuchtgerät erfolgt, das bisher notwendige Hebelgestänge entfällt und das Applikationsorgan dadurch wesentlich leichter zu handhaben ist.

## Patentansprüche

1. Verfahren zum Auswuchten von Rädern, wobei durch zumindest einen Testlauf des Rades die Größe und Position seiner Unwucht bestimmt und ein Applikationsorgan (6) zum Abtasten der Felgenmaße und Felgenposition und/oder zum Überbringen eines Ausgleichsgewichtes an eine Ausgleichsstelle der Felge (3) verwendet wird und die Bewegungen des Applikationsorgans (6) beim Abtasten und/oder beim Überbringen des Ausgleichsgewichtes erfasst werden, **dadurch gekennzeichnet, dass**
die Bewegungen des Applikationsorgans (6) beim Abtasten der Felge (3) und/oder zum Überführen des Ausgleichsgewichtes an die Felge durch Trägheitsnavigation unter Verzicht auf eine mechanische Führung des Applikationsorgans (6) erfasst werden.

2. Verfahren nach Anspruch 1,
**dadurch gekennzeichnet, dass** die Bewegungen des Applikationsorgans (6) größenmäßig und richtungsmäßig durch eingebaute Bewegungssensoren, insbesondere durch Acceleratoren (7) und Gyroskope (8) erfasst werden.

3. Verfahren nach Anspruch 1,
**dadurch gekennzeichnet, dass** das Applikationsorgan (6) zur Abtastung der Feigenmaße und Felgenposition wie auch zum Heranführen des Ausgleichsgewichtes (10) benutzt wird.

4. Verfahren nach Anspruch1,
**dadurch gekennzeichnet, dass** die Signale des Applikationsorgans (6) drahtlos oder über ein flexibles Kabel an eine messtechnische Auswerteeinheit übertragen werden.

5. Verfahren nach Anspruch 1,
**dadurch gekennzeichnet, dass** eine Aufnahmestation (9) in definierter Position für den Applikationssensor (6) vorgesehen ist.

6. Verfahren nach Anspruch 5,
**dadurch gekennzeichnet, dass** bei Rückgabe des Applikationssensors (6) in die Aufnahmestation (9) automatisch eine Positionseichung des Applikationssensors erfolgt.

7. Verfahren nach Anspruch 1,
**dadurch gekennzeichnet, dass** ein Signal ausgelöst wird, wenn der Applikationssensor (6) die Ausgleichsstelle an der Felge (3) erreicht.

8. Vorrichtung zur Durchführung des Verfahrens nach Anspruch 1,
**dadurch gekennzeichnet, dass** das Applikationsorgan (6) zumindest einen Bewegungssensor (7, 8) zur Erfassung der vom Applikationsorgan durchgeführten Bewegungen aufweist.

9. Vorrichtung nach Anspruch 8,
**dadurch gekennzeichnet, dass** das Applikationsorgan (6) zumindest ein Accelerometer (7) und ein Gyroskop (8) zur gleichzeitigen Erfassung translatorischer und rotatorischer Bewegungen des Applikationsorgans (6) aufweist.

10. Vorrichtung nach Anspruch 8,
**dadurch gekennzeichnet, dass** das Applikationsorgan (6) für alle drei Raumrichtungen jeweils Bewegungssensoren (7, 8) aufweist.

11. Vorrichtung nach Anspruch 8,
**dadurch gekennzeichnet, dass** die Bewegungssensoren (7, 8) für drei Raumrichtungen in einem gemeinsamen Mikrochip integriert sind.

12. Vorrichtung nach Anspruch 8,
**dadurch gekennzeichnet**, **das** das Applikationsorgan (6) als Handgriff ausgebildet ist und eine Aufnahmefläche (6a) für zumindest ein Ausgleichsgewicht (10) aufweist.

13. Vorrichtung nach Anspruch 8,
**dadurch gekennzeichnet, dass** eine ortfeste Aufnahmestation (9) für den Applikationssensor (6) vorgesehen, insbesondere am Umwuchtmessgerät (1) montiert ist.
